# DEMANDE DE BREVET EUROPEEN

(11) **EP 0 735 553 A1**
(43) Date de publication de la demande: **02.10.1996**
(21) Numéro de dépôt: 96400698.5
(22) Date de dépôt: 29.03.1996
(51) Int. Cl.: H01G 5/014, H01G 5/14

(54) **Condensateur ajustable multitours pour montage sur une face de support**

(30) Priorité: 31.03.1995 FR 9503851
(71) Demandeur: TEKELEC AIRTRONIC, 93310 Sèvres (FR)
(72) Inventeur: Vignal, Jean Georges, 33170 Gradignan (FR)
(74) Mandataire: Berger, Helmut

(57) **Abrégé**

L'invention concerne un condensateur ajustable multitours pour montage sur la surface d'un support.

Le condensateur est du type comprenant un élément stator (1) et un élément rotor de réglage (2), monté rotatif par rapport au stator (1) dans une pièce de connexion électrique externe (3) et séparé du stator (1) par un diélectrique, le stator (1) et ladite pièce de connexion (3) étant électriquement reliés à des zones (27, 28) de contact électrique de ladite su rface de support (26). Le condensateur est disposé sur la surface de support (26) dans une position où son axe s'étend parallèlement à cette surface et en ce que le stator (1) et la pièce intermédiaire réalisée sous forme d'une douille (3) comprennent au moins une portion de surface périphérique plane (14, 15) configurée pour venir en contact avec la zone de contact (27, 28) correspondante de la surface de support (26).

L'invention est applicable pour des condensateurs devant fonctionner jusqu'à dans les bandes des hyperfréquences.

## Description

L'invention concerne un condensateur ajustable multitours pour montage sur une surface d'un support, du type comprenant un élément stator et un élément rotor de réglage monté rotatif par rapport au stator dans une pièce de connexion électrique externe et séparé du stator par un diélectrique, le stator et ladite pièce de connexion étant électriquement reliés à des zones de contact électrique de ladite surface de support.

Les condensateurs connus de ce type sont en général de forme cylindrique et montés en position debout sur la surface. Etant donné que leur axe s'étend ainsi perpendiculairement à cet axe, seulement le stator peut être directement électriquement connecté à sa zone de contact de la surface, tandis que la pièce de connexion électrique du rotor est pourvue d'une patte supplémentaire de connexion à sa zone de contact sur la surface. De plus, la position debout rend encombrant l'ensemble ainsi obtenu.

Cette configuration des condensateurs connus présente l'inconvénient considérable d'une limitation en fréquence due aux selfs des pattes de connexion, en particulier dans la bande des hyperfréquences et ne permet pas un montage automatique. En effet, les pattes de connexion constituent des éléments selfiques produisant une inductance parasite de limitation de fréquence. La forme générale cylindrique est incompatible avec, d'une part, la livraison des composants sur bande ou en magasin et, d'autre part, avec la mise en place automatique. Les condensateurs sont donc généralement reportés sur les circuits de la surface de support par soudure manuelle. En d'autres termes, la forme cylindrique des condensateurs s'oppose à l'utilisation des dispositifs de préhension automatiques, par exemple par aspiration, et à une insertion automatique des composants. Ainsi le condensateur ne se prête pas à un procédé industriel de soudure par réfusion.

La présente invention a par conséquent pour but de proposer des condensateurs ajustables multitours qui permettent un montage entièrement automatique sur leur surface de support et conviennent mieux aux applications hyperfréquences.

Pour atteindre ce but, un condensateur selon l'invention est caractérisé en ce que le condensateur est disposé sur la surface de support dans une position où son axe s'étend parallèlement à la surface et en ce que le stator et la pièce intermédiaire réalisés sous forme d'une douille présentent au moins une portion de surface périphérique plane configurée pour venir en contact avec la zone de contact correspondante de la surface de support.

Selon une caractéristique avantageuse de l'invention, le stator et la douille comportent des parties externes ayant une surface externe périphérique pourvue de zones de contact planes régulièrement réparties autour de la périphérie.

Selon une autre caractéristique avantageuse de l'invention, les zones de contact planes précitées sont des zones d'une surface extérieure de forme générale parallélèpipèdique.

Selon encore une autre caractéristique avantageuse de l'invention, un manchon extérieure isolant est prévu entre le stator et la douille, dont la surface extérieure périphérique comprend au moins une portion de surface plane, qui s'étend parallèlement à l'axe du condensateur et permet une préhension automatique, avantageusement par aspiration, du condensateur.

Selon encore une autre caractéristique avantageuse de l'invention, le manchon extérieur isolant de préhension automatique présente une forme générale parallélèpipèdique.

L'invention sera mieux comprise et d'autres buts, caractéristiques détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue en perspective d'un condensateur ajustable multitour selon la présente invention;
- la figure 2 est une vue en coupe dans le plan II-II indiqué sur la figure 1.

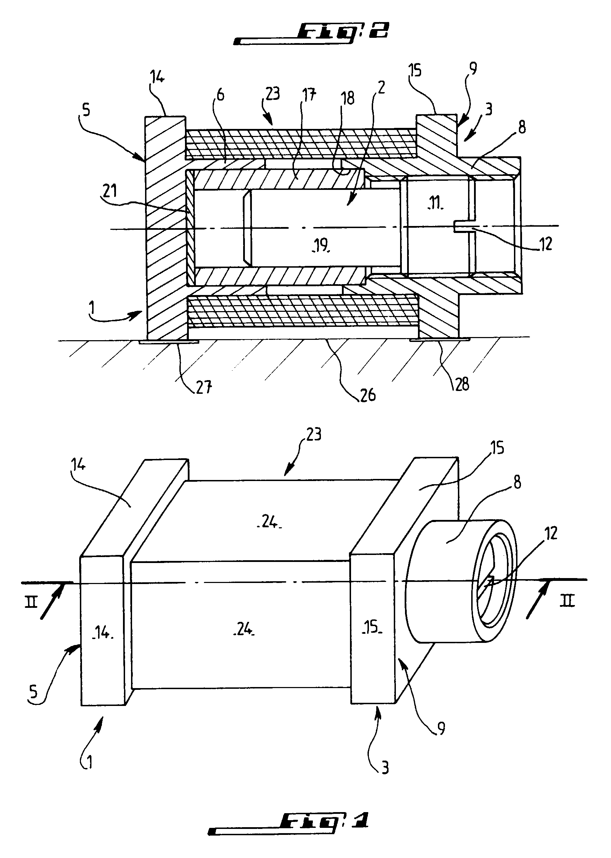

Comme il ressort des figures, un condensateur ajustable multitours selon l'invention comprend un élément stator 1, un élément rotor 2 formant l'organe de réglage du condensateur et monté rotatif dans une pièce fixe en forme de douille 3. Comme le montre la figure 2, le stator 1 comprend une partie de base extérieure 5, de forme parallélèpipèdique, et une partie tubulaire cylindrique interne 6 s'étendant perpendiculairement à la partie 5. La douille 3 présente une forme générale tubulaire coaxiale à la partie tubulaire 6 du stator et est pourvue d'une collerette extérieure 9 de forme générale parallélèpipèdique. La partie tubulaire de la douille est pourvue d'un filetage interne coopérant avec un filetage complémentaire prévu sur une partie de tête cylindrique 11 du rotor. Ainsi ce dernier est axialement déplaçable dans la douille 3 lorsqu'il est entraîné en rotation, par exemple par un tournevis s'engageant dans une fente diamétrale 12. Comme il ressort des figures, la base 5 du stator 1 et la collerette 9 de la douille 3 présentent avantageusement une section transversale carrée et comportent chacun quatre faces planes respectivement 14 et 15 qui s'étendent parallèlement à l'axe du condensateur. Les faces correspondantes 14 et 15 du rotor et de la douille s'étendent sensiblement dans un même plan.

Comme on le voit sur la figure 2, un élément tubulaire diélectrique solide 17, avantageusement en alumine pure monocristalline, par exemple du saphir, est axialement interposé entre le stator 1 et la douille 3 en étant inséré axialement, d'une part, dans la partie tubulaire 6 du stator et, d'autre part, dans un élargissement annulaire 18 pratiqué dans la face interne de l'extrémité axialement interne de la douille 3. Le rotor s'engage axialement dans l'élément tubulaire diélectrique 17, par une portion formant ainsi piston 19. On constate encore qu'un disque isolant 21 est interposé entre l'extrémité de l'élément tubulaire 17 et le fond de la base 5 du rotor. Ce disque évite tout contact électrique entre le piston du rotor 19 et le stator 1.

Une caractéristique essentielle de l'invention réside dans la présence d'un manchon isolant 23 de configuration extérieure parallélèpipèdique et d'une face interne cylindrique, qui entoure les parties tubulaires 6 et 8 internes du stator 1 et de la douille 3. Les quatres faces planes extérieures 24 du manchon, qui sont parallèles aux faces correspondantes planes 14 et 15 du stator et de la douille et en retrait par rapport à celles-ci, permettent la saisie du composant par aspiration en limitant au maximum les fuites d'air. Le rôle du manchon 23 est limité à cette fonction et il n'a aucun impact sur les propriétés électriques du composant. Par conséquent, le manchon peut être réalisé en un matériau peu cher.

Comme cela est montré schématiquement sur la figure 2, le condensateur est placé sur la surface de support 26 dans une position dans laquelle son axe est parallèle à cette surface 26 en prenant appui sur deux zones de contact électriques 27 et 28, à l'aide de deux faces planes 14 et 15 respectivement du stator 1 et de la douille 3. La base 5 du stator 1 et la collerette 9 de la douille 3 qui constituent ainsi les deux électrodes du condensateur reposent de façon stable sur la surface et peuvent être fixés par soudage ou collage sur les zones de contact 27 et 28 de celle-ci. Etant donné que les électrodes sont en saillie, elles ont un rôle de "pied de lavage" permettent le passage du "produit de lavage".

On comprend aisément que grâce aux surfaces périphériques planes 14 et 15 du stator et de la douille, la position du centre de gravité du composant est abaissée et donne au composant une assise stable. De plus, les degrés possibles d'orientation sont limités au maximum. L'invention permet d'utiliser des pièces détachées résistant aux contraintes des températures de soudure ou de polymérisation de la colle et des produits de nettoyage. Il est à noter qu'un endommagement du manchon isolant 23, par exemple lors du soudage du condensateur sur son support n'affecte nullement les propriétés électriques du condensateur. Comme cela est dit plus haut, le manchon a pour unique rôle de permettre la saisie du composant sur la bande de transport et/ou le magasin.

D'autre part, étant donné qu'aucun élément supplémentaire de connexion électrique sur la surface n'est nécessaire, on évite toute inductance parasite, ce qui permet d'utiliser le condensateur aussi dans le domaine des hyperfréquences.

Dans l'exemple représenté, les électrodes extérieures formées par la base 5 du stator 1 et de la collerette 9 de la douille 3 constituent des parties intégrales du stator et de la douille. Bien entendu, elles peuvent être rapportées sur ces deux pièces. Les faces des électrodes extérieures sont traitées pour être soudables selon le procédé de report par réfusion ou collage. Elles seront réalisées avantageusement en métal doré, par exemple en laiton.

Il est encore à noter que les zones d'angle des électrodes peuvent être arrondies. De façon générale, il importe que chaque électrode comporte au moins une zone de surface plane permettant la connexion au support. La forme extérieure du condensateur permet une mise aisée sur la bande d'acheminement au poste de montage, la partie cylindrique externe de la douille servant de détrompeur pour le seul degré d'orientation restant libre.

Il est encore à souligner que l'invention s'applique à toute sorte de condensateurs ajustables cylindriques, à diélectrique à air ou solide. Dans le cas d'un diélectrique à air le manchon 23 doit être réalisé en matériau céramique ou diélectrique mécaniquement très solide.

## Revendications

1. Condensateur ajustable multitour pour montage sur la surface d'un support, du type comprenant un élément stator et un élément rotor de réglage, monté rotatif par rapport au stator dans une pièce de connexion électrique externe et séparé du stator par un diélectrique, le stator et ladite pièce de connexion étant électriquement reliés à des zones de contact électrique de ladite surface de support, caractérisé en ce que le condensateur est disposé sur la surface de support (26) dans une position où son axe s'étend parallèlement à cette surface et en ce que le stator (1) et la pièce intermédiaire réalisée sous forme d'une douille (3) comprennent au moins une portion de surface périphérique plane (14, 15) configurée pour venir en contact avec la zone de contact (27, 28) correspondante de la surface de support (26).

2. Condensateur selon la revendication 1, caractérisé en ce que le stator (1) et la douille (3) comportent des parties externes ayant une surface externe périphérique pourvue de zones de contact planes (14, 15) régulièrement réparties autour de la périphérie.

3. Condensateur selon la revendication 2, caractérisé en ce que les zones de contact planes précitées (14, 15) sont des zones d'une surface extérieure périphérique de forme générale parallélèpipèdique, avantageusement à section transversale carrée.

4. Condensateur selon la revendication 3, caractérisé en ce que le stator (1) et la douille (3) comportent respectivement une partie de base extérieure (5) et une partie formant collerette (9), qui présentent les surfaces extérieures périphériques de forme générale parallélè-pipèdique précitée.

5. Condensateur selon l'une des revendications précédentes, caractérisé en ce qu'un manchon extérieur isolant (23) est prévu entre le stator (1) et la douille (3) dont la surface extérieure périphérique comprend au moins une portion de surface plane (24), s'étendant parallélèment à l'axe du condensateur et permettent une préhension automatique, avantageusement par aspiration, du condensateur.

6. Condensateur selon la revendication 5, caractérisé en ce que le manchon extérieur isolant de préhension automatique présente une forme générale parallélèpipèdique.

7. Condensateur selon l'une des revendications précédentes, caractérisé en ce qu'un élément tubulaire (17) en un matériau diélectrique est axialement interposé entre le stator (1) et la douille (3), le rotor (2) comportant une partie de piston (19) axialement mobile dans cet élément tubulaire (17).

8. Condensateur selon la revendication 7, caractérisé en ce que le stator comprend une partie tubulaire interne (6) et l'élément tubulaire diélectrique (17) est axialement inséré dans cette partie tubulaire (6) et dans l'extrémité adjacente de la douille (3).

9. Condensateur selon les revendications 4 et 8, caractérisé en ce que la partie tubulaire précitée (6) du stator (1) fait perpendiculairement saillie de la base de forme extérieure parallélèpipèdique (5) du rotor et en ce qu'un disque isolant (21) est interposé entre la surface interne de la base (5) et l'extrémité de l'élément tubulaire (17).

10. Condensateur selon l'une des revendications précédentes, caractérisé en ce qu'au moins les parties externes du rotor (1) et de la douille (3) sont réalisées en métal doré, avantageusement en laiton.

11. Condensateur selon l'une des revendications 1 à 7, 9 ou 10, caractérisé en ce que le diélectrique précité est un diélectrique à air et en ce que le manchon (23) est en un matériau mécaniquement solide.

12. Condensateur selon l'une des revendications 5 à 11, caractérisé en ce que les surfaces extérieures périphériques (14, 15) du stator (1) et de la douille (9) font saillie par rapport à la surface périphérique du manchon (23) pour permettre le lavage du produit de soudage ou collage.
